(19) Europäisches Patentamt

European Patent Office

Office européen des brevets

(11) Veröffentlichungsnummer: **0 005 831**
**B1**

(12) **EUROPÄISCHE PATENTSCHRIFT**

(45) Veröffentlichungstag der Patentschrift:
**20.01.82**

(21) Anmeldenummer: **79101659.5**

(22) Anmeldetag: **30.05.79**

(51) Int. Cl.³: **B 23 F 1/04,** B 23 D 11/00,
B 23 D 3/02

(54) Vorrichtung zum Innenverzahnen grosser Werkstücke an einer Zahnradstossmaschine.

(30) Priorität: **02.06.78 CH 6063/78**

(43) Veröffentlichungstag der Anmeldung:
**12.12.79 Patentblatt 79/25**

(45) Bekanntmachung des Hinweises auf die Patenterteilung:
**20.01.82 Patentblatt 82/3**

(84) Benannte Vertragsstaaten:
**FR GB IT**

(56) Entgegenhaltungen:
**FR-A-1 081 988**

(73) Patentinhaber: **Maag-Zahnräder und -Maschinen Aktiengesellschaft, Hardstrasse 219, CH-8023 Zürich (CH)**

(72) Erfinder: **Demuth, Walter, Dipl. Masch.-Techniker, Klotenerstrasse 6, CH-8304 Wallisellen (CH)**

## Vorrichtung zum Innenverzahnen grosser Werkstücke
## an einer Zahnradstossmaschine

Die Erfindung betrifft eine Vorrichtung zum Innenverzahnen grosser Werkstücke an einer Zahnradstossmaschine mit einem Maschinenbett, auf dem ein Werkstücktisch zum Aufspannen eines Werkstückes und ein Ständer in bezug aufeinander um die Werkstückachse drehbar und radial zu dieser zustellbar angeordnet sind und der Ständer eine Führung aufweist, längs der ein Stössel mittels eines Stösselantriebs hin und her bewegbar ist.

Es sind Zahnradstossmaschinen bekannt, die nach dem Teilverfahren oder Teilwälzverfahren nicht nur Aussenverzahnungen, sondern auch Innenverzahnungen wie beispielsweise Keilverzahnungen für Wellen-Naben-Verbindungen sowie Kupplungsverzahnungen mit hoher Genauigkeit und Oberflächengüte herstellen können. Zum Herstellen von Innenverzahnungen muss der Stössel, der das Verzahnungswerkzeug trägt, eine Ausladung haben, d. h. um eine Strecke vom Ständer wegragen, die grösser als der halbe Aussendurchmesser des Werkstücks ist. Dies bereitet bei Werkstücken grossen Durchmessers Schwierigkeiten, denn bei einem weit ausladenden Stössel erzeugen die vom Verzahnungswerkzeug ausgeübten Zerspannungskräfte erhebliche Biegemomente im Stössel. Man muss deshalb entweder merkliche Verformungen des Stössels und damit einhergehende Verschlechterungen der Genauigkeit und Oberflächengüte der Innenverzahnung hinnehmen oder den Stössel besonders kräftig und dementsprechend schwer gestalten, was den Preis der gesamten Zahnradstossmaschine erhöht und deren Arbeitsgeschwindigkeit vermindert. Eine solche Maschine arbeitet dann beim Herstellen von Aussenverzahnungen nicht mehr wirtschaftlich, weshalb es bisher erforderlich war, Aussen- und Innenverzahnungen von Zahnrädern grossen Durchmessers auf verschiedenen Maschinen herzustellen. Die damit verbundene Notwendigkeit, das Werkstück umzuspannen, hat aber wiederum den Nachteil, dass Verluste nicht nur an Zeit, sondern vor allem an Genauigkeit der Zuordnung, insbesondere Achsfluchtung, zwischen Innen- und Aussenverzahnung unvermeidlich sind.

Der Erfindung liegt deshalb die Aufgabe zugrunde, eine Vorrichtung zum Innenverzahnen grosser Werkstücke zu schaffen, die es ermöglicht, an bekannten Zahnradstossmaschinen mit nicht oder nur mässig ausladendem und deshalb an sich nur für Aussenverzahnungen geeignetem Stössel auch Zentrumsbohrungen oder Naben grosser Zahnräder mit Keil- und/oder Kupplungsverzahnungen zu versehen.

Die Aufgabe ist erfindungsgemäss dadurch gelöst, dass ein Hilfsständer um die Werkstückachse drehbar und radial dazu verschiebbar auf einem am Werkstück gleichachsig befestigbaren Lagerkranz angeordnet ist und eine weitere Führung aufweist, längs der ein vom Stössel über eine Brücke antreibbarer Hilfsstössel mit einem Verzahnungswerkzeug in Zahnlängsrichtung der Innenverzahnung des Werkstücks hin und her bewegbar ist.

Bei der erfindungsgemässen Vorrichtung, die sich leicht an bekannte Zahnradstossmaschinen anbauen lässt, bewegt der Stösselantrieb über den Stössel und die Brücke den Hilfsstössel hin und her. Die hin und her gehende Bewegung ist im allgemeinen eine senkrecht auf und ab gehende Bewegung, da Zahnradstossmaschinen für grössere Werkstücke im allgemeinen so gestaltet sind, dass das Werkstück mit senkrechter Achse auf den Maschinentisch aufgespannt wird, und da Innenverzahnungen wie Keil- oder Kupplungsverzahnungen, die an grösseren Werkstücken erzeugt werden, meist Geradverzahnungen sind. Die erfindungsgemässe Vorrichtung lässt sich aber auch so gestalten, dass mit ihr schräge Innenverzahnungen erzeugt werden können; hierzu ist es nur erforderlich, dass die Führung am Hilfsständer sich schräg zur Werkstückachse einstellen lässt, wie dies bei Führungen am Ständer von Zahnradstossmaschinen und anderen Zahnradbearbeitungsmaschinen bekannt ist.

Alle zum Herstellen einer Verzahnung erforderlichen Bewegungen der erfindungsgemässen Vorrichtung lassen sich von Antrieben ableiten, die an einer Zahnradstossmaschine ohnehin vorhanden sind. Dies gilt zunächst für die Hubbewegungen des Hilfsstössels, die wie beschrieben vom Stösselantrieb der Zahnradstossmaschine erzeugt werden. Darüberhinaus sorgt die erfindungsgemässe Brücke dafür, dass der Hilfsständer und mit ihm der Hilfsstössel an den radialen Vorschubbewegungen wie auch an Teilbewegungen und etwaigen Wälzbewegungen des Ständers in bezug auf den Werkstücktisch teilnimmt. Die erfindungsgemässe Vorrichtung braucht also keinen eigenen Antrieb zu haben; deshalb ist sie in ihrem Aufbau einfach und leicht und lässt sich mit entsprechend geringem Aufwand an eine Zahnradstossmaschine einerseits und an das auf dem Maschinentisch aufgespannte Werkstück anderseits anbauen.

Es ist vorteilhaft, wenn die Brücke einen von den Stösselbewegungen gesteuerten Schiebeantrieb zum Verändern des Abstands des Hilfsständers vom Ständer aufweist. Dieser Schiebeantrieb ermöglicht es, das am Hilfsstössel angeordnete Verzahnungswerkzeug nach jedem Arbeitshub für die Dauer des Rückhubes am Werkstück abzuheben, damit das Werkzeug geschont wird und eine Innenverzahnung hoher Oberflächengüte erzeugen kann. Der Schiebeantrieb kann von den Stösselbewegungen nicht nur gesteuert sein, sondern darüberhinaus seine Antriebskraft über ein Umlenkgetriebe bekannter Bauart, beispielsweise ein Keilgetriebe, erhalten. Bei bevorzugten Ausführungsformen der Erfindung weist der Schiebeantrieb jedoch eine eigene, beispielsweise elektrische, pneumatische oder hydraulische Kraftquelle auf.

Wenngleich es aus dem beschriebenen Grund vorteilhaft ist, den Abstand zwischen Hilfsständer und Ständer periodisch verändern zu können, so kann die erfindungsgemässe Brücke doch auch so gestaltet sein, dass sie den Hilfsständer starr mit dem Ständer der Zahnradstossmaschine verbindet. Dies ist beispielsweise dann möglich, wenn der Innendurchmesser der Innenverzahnung, die mit der erfindungsgemässen Vorrichtung hergestellt werden soll, hinreichend gross ist, um eine schwenkbare Anordnung des Verzahnungswerkzeugs am Hilfsstössel zu ermöglichen, entsprechend der üblichen Anordnung des Werkzeugs am Stössel einer Zahnradstossmaschine, bei der das Werkzeug bei jedem Rückhub vom Werkstück weggeschwenkt wird.

Die erfindungsgemässe Brücke kann so gestaltet sein, dass sie den Hilfsstössel unmittelbar mit dem Stössel der Zahnradstossmaschine verbindet. In diesem Fall wird die Brücke zwar von den Zerspannungskräften mit Biegemomenten belastet, doch bleiben Durchbiegungen der Brücke ohne nennenswerten Einfluss auf die Bearbeitungsgenauigkeit, da der Hilfsstössel bei ausreichend kräftiger Bemessung des Hilfsständers und der ihn tragenden Bauteile hinreichend genau geführt ist.

Bei bevorzugten Ausführungsformen der Erfindung werden jedoch nennenswerte Biegebelastungen der Brücke wie auch der übrigen Bauteile der erfindungsgemässen Vorrichtung dadurch vermieden, dass zur Brücke eine Welle gehört, die einerseits am Ständer und anderseits am Hilfsständer gelagert ist und zwei Ritzel trägt, von denen das eine mit einer am Stössel angeordneten Zahnstange und das andere mit einer am Hilfsstössel angeordneten Zahnstange kämmt. Die Welle lässt sich mit verhältnismässig geringem Aufwand hinreichend kräftig bemessen, um den auf sie einwirkenden Drehmomenten ohne nennenswerte Torsion standzuhalten; im übrigen bliebe selbst eine erhebliche Torsion der Welle ohne Einfluss auf den Hilfsstössel und dessen Führung im Hilfsständer.

Wenn die Brücke einen Schiebeantrieb aufweist, dann ist die Welle teleskopartig ausziehbar. Dabei kann der Schiebeantrieb entweder an einer zur Welle parallelen, den Ständer mit dem Hilfsständer verbindenden Stange oder an der Welle selbst angeordnet sein.

Ausführungsbeispiele der Erfindung werden im folgenden anhand schematischer Zeichnungen näher erläutert. Es zeigt:

Fig. 1 eine Schrägansicht einer bekannten Zahnradstossmaschine mit einem Werkstück und einer erfindungsgemässen Vorrichtung;

Fig. 2 eine Schrägansicht eines Teils der Vorrichtung in Richtung des Pfeils II in Fig. 1;

Fig. 3 einen Ausschnitt aus Fig. 1 mit abgewandelten Einzelheiten der Vorrichtung; und

Fig. 4 den senkrechten Schnitt IV–IV in Fig. 1 mit weiter abgewandelten Einzelheiten der Vorrichtung.

Die dargestellte Zahnradstossmaschine hat ein Maschinenbett 10, auf dem ein Werkstücktisch 12 um eine senkrechte Achse A drehbar gelagert und ein Bettschlitten 14 in Richtung des Doppelpfeils B tangential zum Werkstücktisch verschiebbar geführt ist. Auf dem Werkstücktisch 12 ist ein Werkstück 16 befestigt, das eine Aussenverzahnung 16' aufweist und mit einer Innenverzahnung 16'' versehen werden soll. Auf dem Bettschlitten 14 ist ein Ständer 18 in Richtung der Pfeile C und C' radial in bezug auf den Werkstücktisch 12 verschiebbar geführt. Am Ständer 18 ist eine Stösselführung 20 um eine in bezug auf den Werkstücktisch 12 radiale Drehachse D dreheinstellbar befestigt. Die Stösselführung 20 ist im dargestellten Beispiel senkrecht eingestellt. An der Stösselführung 20 ist ein Elektromotor 22 befestigt und eine Spindel 24 gelagert, die mit einem an der Stösselführung verschiebbaren Stössel 26 in Gewindeeingriff steht. Zur Zahnradstossmaschine gehört ferner ein unter dem Werkstücktisch 12 angeordneter, in den Zeichnungen nicht sichtbarer Antrieb, mit dem sich der Werkstücktisch 12 in Richtung der Pfeile E oder in Gegenrichtung um Schritte von einstellbarer Länge drehen lässt, die sich an die Teilungen jeder der Verzahnungen 16' und 16'' des Werkstücks 16 anpassen lassen.

Das im Vorstehenden Beschriebene entspricht der üblichen Bauweise einer Zahnradstossmaschine.

Auf das Werkstück 16 ist nun eine Vorrichtung zum Herstellen der Innenverzahnung 16'' aufgebaut. Dazu gehört ein Lagerkranz 28, der genau gleichachsig mit dem Werkstück 16 und Werkstücktisch 12 auf dem Werkstück befestigt ist. Zur Befestigung dienen im dargestellten Beispiel Schrauben 30, die sich durch den Lagerkranz 28 erstrecken und in Auflageplatten 32 eingeschraubt sind. Die Auflageplatten sind an das Werkstück 16 aufgeschweisst und derart bearbeitet, dass ihre Oberseiten in einer gemeinsamen, zur Werkstückachse A genau rechtwinkligen Ebene liegen. Am Lagerkranz 28 ist mittels hochgenauer Axial- und Radiallager 34 eine Drehplatte 36 um die Werkstückachse A drehbar gelagert. Auf der Drehplatte 36 sind zwei in bezug auf die Werkstückachse A rechtwinklig und im Abstand angeordnete Führungsschienen 38 befestigt; diese führen einen Hilfsständerschlitten 40, auf dem ein Hilfsständer 42 befestigt ist.

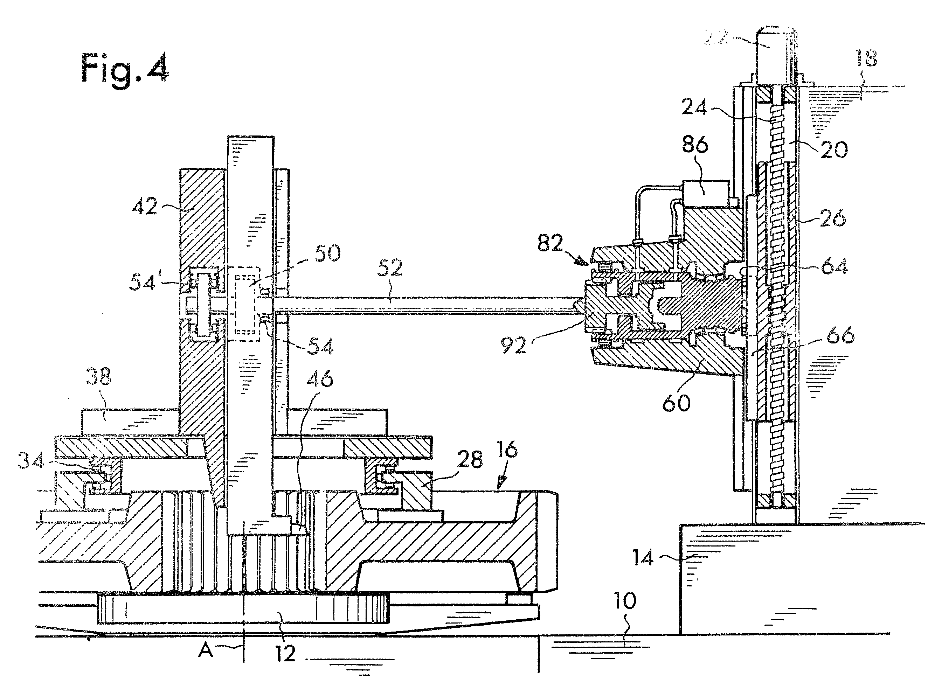

Im Hilfsständer 42 ist senkrecht verschiebbar ein Hilfsstössel 44 geführt, an dessen unterem Ende ein Verzahnungswerkzeug 46 in Gestalt eines einzelnen Hobelzahns befestigt ist. Am Hilfsstössel 44 ist eine Zahnstange 48 ausgebildet oder befestigt; mit dieser Zahnstange kämmt ein Ritzel 50, das an einer Welle 52 befestigt ist. Die Welle 52 ist in der Nähe des Ritzels 50 im Hilfsständer 42 gelagert; in Fig. 4 ist ein Radiallager 54 und ein Axiallager 54' angedeutet.

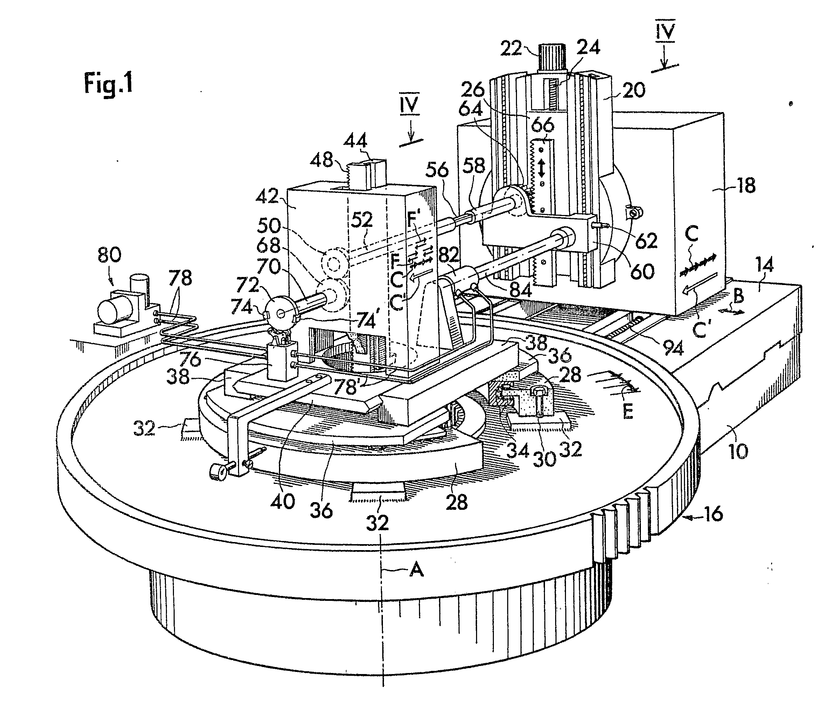

Die Welle 52 weist gemäss Fig. 1 einen Vielkant 56 auf, der in einem rohrförmigen Wellenstück 58 von entsprechendem Innenprofil teleskopartig verschiebbar ist. Das Wellenstück 58 ist in einer Traverse 60 gelagert, die an der Stösselführung 20 verschiebbar geführt ist und den Stössel 26 überbrückt, so dass sie ihn bei seiner auf und nieder gehenden Bewegung nicht behindert. Mittels einer Klemmschraube 62 ist die Traverse 60 an der Stösselführung 20 in einer Höhe festgeklemmt, die von der Dicke des Werkstücks 16 abhängt. Am Wellenstück 58 ist ein Ritzel 64 befestigt, das mit einer am Stössel 26 befestigten Zahnstange 66 kämmt. Die auf und nieder gehenden Bewegungen, die der Elektromotor 22 über die Spindel 24 dem Stössel 26 erteilt, werden somit über die Zahnstange 66, das Ritzel 64, die Welle 52, das Ritzel 50 und die Zahnstange 48 auf den Hilfsstössel 44 übertragen, so dass dieser sich jeweils in gleicher Richtung und, da die Ritzel 64 und 50 im dargestellten Beispiel gleich sind, auch um gleiche Beträge auf und ab bewegt wie der Stössel 26.

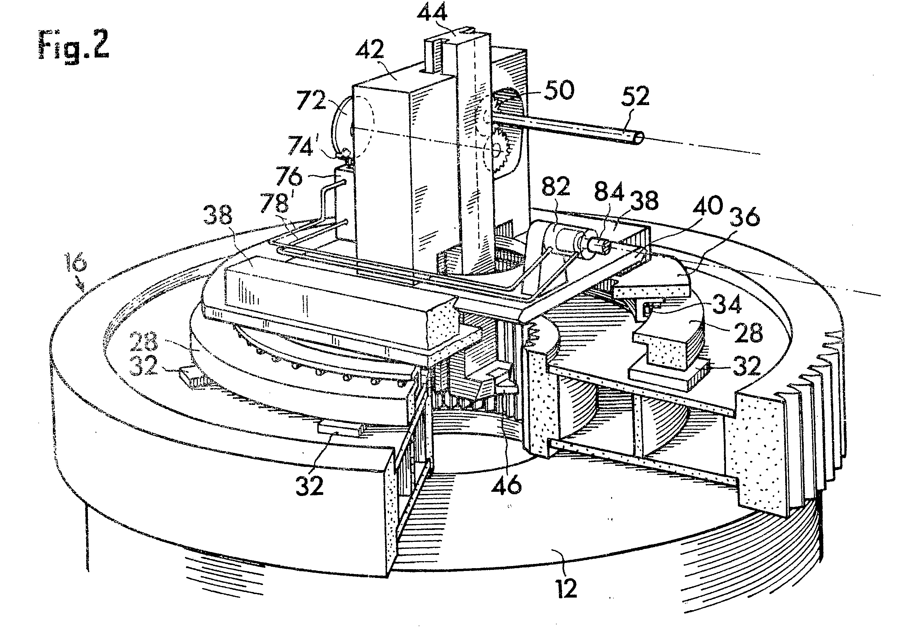

Mit dem Ritzel 50 kämmt gemäss Fig. 1 und 2 ein grösseres Zahnrad 68, das durch eine im Hilfsständer 42 gelagerte Welle 70 mit einer Nockenscheibe 72 verbunden ist. Am Umfang der Nockenscheibe 72 sind zwei Nocken 74 und 74' befestigt, die ein am Hilfsständerschlitten 40 angeordnetes Ventil 76 steuern. Das Ventil 76 steuert seinerseits Leitungen 78 und 78', die eine Hydraulikpumpe 80 mit einem als doppeltwirkende Kolben-Zylindereinheit ausgebildeten Schiebeantrieb 82 verbinden.

Beim Ausführungsbeispiel gemäss Fig. 1 und 2 ist der Zylinder des Schiebeantriebs 82 am Hilfsständerschlitten 40 befestigt und der zugehörige Kolben ist an einer Stange 84 befestigt, die sich parallel zur Welle 52 erstreckt und mit ihrem vom Schiebeantrieb 82 entfernten Ende an der Traverse 60 befestigt ist.

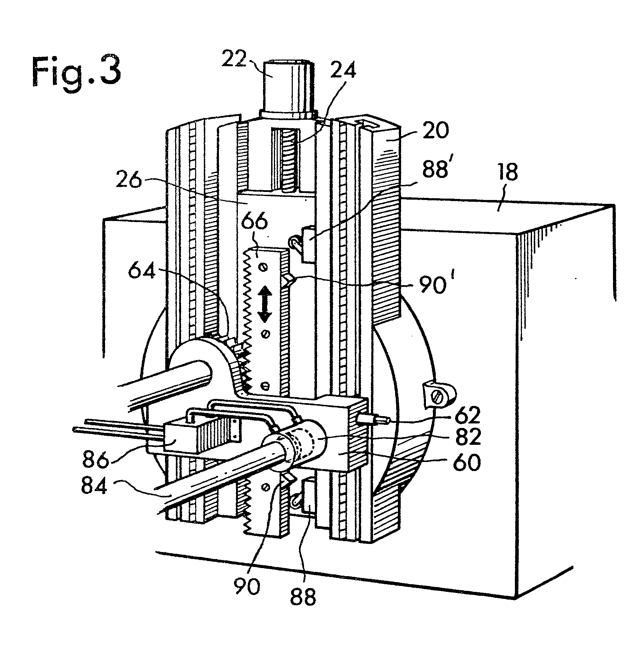

Stattdessen kann der Zylinder des Schiebeantriebs 82 gemäss Fig. 3 an der Traverse 60 befestigt sein, während das vom Schiebeantrieb entfernte Ende der Stange 84 am Hilfsständerschlitten 40 befestigt ist. In diesem Fall ist anstelle des mechanisch betätigbaren Ventils 76 vorzugsweise ein elektromagnetisch betätigbares Ventil 86 vorgesehen, das unmittelbar an der Traverse 60 befestigt und von Schaltern 88 und 88' betätigt ist, die an der Stösselführung 20 angeordnet und von an der Zahnstange 66 verstellbar befestigten Nocken 90 und 90' betätigbar sind.

Bei einer weiteren, in Fig. 4 dargestellten Variante ist der Schiebeantrieb 82, ebenfalls in Gestalt einer Kolben-Zylindereinheit, an der Welle 52 angeordnet und die Stange 84 entfällt. An der Welle 52 ist gemäss Fig. 4 ein aussenverzahntes Kupplungsteil 92 befestigt, das zugleich als Kolben des Schiebeantriebs 82 ausgebildet ist. Das in der Traverse 60 gelagerte hohle Wellenstück 58 ist zugleich als innenverzahntes Kupplungsteil und als doppeltwirkender Zylinder ausgebildet und ist an das Ventil 86 angeschlossen.

Die Vorrichtung zum Innenverzahnen arbeitet in den dargestellten und beschriebenen Varianten folgendermassen: Bei jedem Abwärtshub des Stössels 26 führt der Hilfsstössel 44 einen ebenfalls abwärts gerichteten Arbeitshub aus, bei dem das Verzahnungswerkzeug 46 die Innenverzahnung 16″ bearbeitet. Sobald das Verzahnungswerkzeug 46 sich nach unten aus der Innenverzahnung 16″ herausbewegt hat, steuert der Nocken 74 (Fig. 1 und 2) das Ventil 76 um bzw. steuert der Nocken 90 (Fig. 3 und 4) das Ventil 86 um und dadurch wird der Schiebeantrieb 82 derart unter Druck gesetzt, dass er den Hilfsständer 42 in Richtung vom Ständer 18 weg um eine Strecke verschiebt, die mit einem der dünnen Pfeile F in Fig. 1 angedeutet ist. Gegen Ende des Aufwärtshubes des Stössels 26 und des Hilfsstössels 44 steuert der Nocken 74' (Fig. 1 und 2) bzw. 90' (Fig. 3 und 4) das Ventil 76 bzw. 86 erneut um, so dass der Schiebeantrieb 82 in entgegengesetzter Richtung unter Druck gesetzt wird und den Hilfsständer 42 in Richtung des Pfeils F' in seine Arbeitsstellung zurückschiebt. Während des Aufwärtshubes kann der Hilfsständer 42 im Sinne eines der Pfeile C in Fig. 1 verschoben werden, damit das Verzahnungswerkzeug 46 eine Zustellbewegung ausführt; diese Zustellung geschieht dadurch, dass der Ständer 18 mittels seines üblichen Vorschubantriebs, von dem in Fig. 1 eine Gewindespindel 94 angedeutet ist, ebenfalls um den Betrag C verstellt wird, wobei er über die Stange 84 den Hilfsständerschlitten 40 samt Hilfsständer 42 mitnimmt. Anschliessend findet der nächste Arbeitshub des Hilfsstössels 44 statt. Wenn auf diese Weise nach einer bestimmten Anzahl Arbeitshübe eine Zahnlücke der Innenverzahnung 16″ fertiggehobelt ist und eine Teilungsbewegung des Werkstücks 16 erforderlich ist, wird der Ständer 18, und mit ihm der Hilfsständer 42 um eine mit den Pfeilen C' in Fig. 1 angedeutete Strecke zurückbewegt, damit sich das Werkstück 16 frei unter der Vorrichtung zum Innenverzahnen drehen kann.

**Patentansprüche**

1. Vorrichtung zum Innenverzahnen grosser Werkstücke an einer Zahnradstossmaschine mit einem Maschinenbett (10), auf dem ein Werkstücktisch (12) zum Aufspannen eines Werkstücks (16) und ein Ständer (18) in bezug aufeinander um die Werkstückachse (4) drehbar und radial zu dieser zustellbar angeordnet sind und der Ständer (18) eine Führung (20) aufweist, längs der ein Stössel (26) mittels eines Stösselantriebs (22, 24) hin und her bewegbar ist, dadurch gekennzeichnet, dass ein Hilfsständer (42) um die Werkstückachse (A) drehbar und radial dazu verschiebbar auf einem am Werkstück (16) gleichachsig befestigbaren Lagerkranz (28) angeordnet ist und eine weitere Führung aufweist, längs der ein vom Stössel (26) über eine Brücke (Welle 52, Stange 84) antreibbarer Hilfsstössel (44) in Zahnlängsrichtung der Innenverzahnung (16″) des Werkstücks (16) hin und her bewegbar ist.

2. Vorrichtung nach Anspruch 1, dadurch gekennzeichnet, dass die Brücke (Welle 52, Stange 84) einen von den Stösselbewegungen gesteuerten Schiebeantrieb (82) zum Verändern des Abstands des Hilfsständers (42) vom Ständer (18) aufweist.

3. Vorrichtung nach Anspruch 2, dadurch gekennzeichnet, dass der Schiebeantrieb (82) eine eigene Kraftquelle (Hydraulikpumpe 80) aufweist.

4. Vorrichtung nach einem der Ansprüche 1 bis 3, dadurch gekennzeichnet, dass zur Brücke eine Welle (52) gehört, die einerseits am Ständer (18) und anderseits am Hilfsständer (42) gelagert ist und zwei Ritzel (50, 64) trägt, von denen das eine (64) mit einer am Stössel (26) angeordneten Zahnstange (66) und das andere (50) mit einer am Hilfsstössel (44) angeordneten Zahnstange (48) kämmt.

5. Vorrichtung nach Anspruch 4 in Verbindung mit Anspruch 2 oder 3, dadurch gekennzeichnet, dass die Welle (52) teleskopartig ausziehbar ist.

6. Vorrichtung nach Anspruch 5, dadurch gekennzeichnet, dass der Schiebeantrieb (82) an einer zur Welle (52) parallelen, den Ständer (18) mit dem Hilfsständer (42) verbindenden Stange (84) angeordnet ist.

7. Vorrichtung nach Anspruch 5, dadurch gekennzeichnet, dass der Schiebeantrieb (82) an der Welle (52) angeordnet ist.

## Claims

1. Device for internally toothing large workpieces on a gear-shaping machine with a machine bed (10), on which a worktable (12) for clamping a workpiece (16) and a column (18) are arranged so that, relative to one another, they can be rotated about the axis (A) of the workpiece and can be infed radially to this axis, the column (18) having a guide (20) along which a ram can be moved to and fro by means of a ram drive (22, 24) characterised in that an auxiliary column (42) is arranged, to be rotatable about the axis (A) of the workpiece and to be displaceable radially thereto, on a bearing ring (28), which can be fixed coaxially on the workpiece (16), and has a further guid along which an auxiliary ram (44) which can be driven by the ram (26) via a bridge (shaft 52, rod 84), can be moved to and fro in the longitudinal direction of the teeth of the internal toothing (16″) of the workpiece (16).

2. Device according to claim 1, characterised in that the bridge (shaft 52, rod 84) comprises a shift-drive (82) controlled by the ram movements, for varying the distance of the auxiliary column (42) from the column (18).

3. Device according to claim 2, characterised in that the shift-drive (82) has its own power source (hydraulic pump 80).

4. Device according to one of claims 1 to 3, characterised in that the bridge includes a shaft (52) which is mounted on one side on the column (18) and on the other side on the auxiliary column (42) and carries two pinions (50, 64) of which one (64) meshes with a rack (66) arranged on the ram (26) and the other (50) meshes with a rack (48) arranged on the auxiliary ram (44).

5. Device according to Claim 4 in conjunction with Claim 2 or 3, characterised in that the shaft (52) is telescopically extensible.

6. Device according to Claim 5, characterised in that the shift-drive (82) is located on a rod (84) which is parallel to the shaft (52) and connectes the column (18) to the auxiliary column (42).

7. Device according to Claim 5, characterised in that the shift-drive (82) is located on the shaft (52).

## Revendications

1. Appareil à tailler une denture inférieure sur de grandes pièces dans une machine à tailler les engrenages comportant un banc (10) sur lequel une table porte-pièce (12) destinée à la fixation d'une pièce (16) et un bâti (18) sont disposés de manière à pouvoir tourner l'un par rapport à l'autre autour de l'axe (A) de la pièce, et de manière à pouvoir être approchés radialement à cet axe, le bâti (18) présentant un guide (20) le long duquel un coulisseau (26) peut aller et venir sour l'action d'un entraînement de coulisseau (22, 24), caractérisé en ce qu'un bâti auxiliaire (42) est disposé, de manière à pouvoir tourner autour de l'axe (A) de la pièce et à pouvoir coulisser radialement à cet axe, sur une couronne d'appui (28) pouvant se fixer coaxialement à la pièce (16), et présente un guide supplémentaire le long duquel peut aller et venir, dans la direction longitudinale des dents de la denture intérieure (16″) de la pièce (16), un coulisseau auxiliaire (44) pouvant être entraîné par le coulisseau (26) par l'intermédiaire d'un pont (arbre 52, tige 84).

2. Appareil selon la revendication 1, caractérisé en ce que le pont (arbre 52, tige 84) présente un entraînément de coulissement (82) commandé par les mouvements du coulisseau et permettant de modifier la distance du bâti auxiliaire (42) du bâti (18).

3. Appareil selon la revendication 2, caractérisé en ce que l'entraînement de coulissement (82) présente une source de force propre (pompe hydraulique 80).

4. Appareil selon l'une des revendications 1 à 3, caractérisé en ce que le pont comporte un arbre (52), qui est monté, d'une part, sur le bâti (18), et, d'autre part, sur le bâti auxiliaire (42) et porte deux pignons (50, 64) dont l'un (64) engrène avec une crémaillère (66) disposée sur le coulisseau (26) et l'autre avec une crémaillère (48) disposé sur le coulisseau auxiliaire (44).

5. Appareil selon la revendication 4 en combinaison avec l'une des revendications 2 et 3, caractérisé en ce que l'arbre (52) peut se déployer télescopiquement.

6. Appareil selon la revendication 5, caractérisé en ce que l'entraînement de coulissement (82) est disposé sur une tige (84) parallèle à l'arbre (52) et reliant le bâti (18) au bâti auxiliaire (42).

7. Appareil selon la revendication 5, caractérisé en ce que l'entraînement de coulissement (82) est disposé sur l'arbre (52).

Fig.1

0 005 831

Fig.2

Fig.3

Fig.4

0 005 831